# EUROPÄISCHE PATENTSCHRIFT

(11) **EP 1 757 839 B1**
(45) Veröffentlichungstag und Bekanntmachung des Hinweises auf die Patenterteilung: **12.03.2008**
(21) Anmeldenummer: 05018323.5
(22) Anmeldetag: 24.08.2005
(51) Int. Cl.: F16H 1/22, F16H 1/46, B02C 15/00

(54) **Schwerlastgetriebe für Walzenschüsselmühlen**
Transmission for roller crusher
Transmission pour un broyeur à auge

(43) Veröffentlichungstag der Anmeldung: 28.02.2007
(73) Patentinhaber: MAAG Gear AG, 8404 Winterthur (CH)
(72) Erfinder: Schwingshandl, Frank, 8105 Regensdorf (CH)
(74) Vertreter: Troesch Scheidegger Werner AG

(56) Entgegenhaltungen:
- CH-A5- 658 801
- CH-A5- 694 244
- DE-A1- 19 917 607
- DE-A1- 19 917 609
- DE-C1- 3 145 655
- PATENT ABSTRACTS OF JAPAN Bd. 016, Nr. 115 (M-1224), 23. März 1992 (1992-03-23) -& JP 03 282045 A (HITACHI LTD), 12. Dezember 1991 (1991-12-12)

## Beschreibung

Die vorliegende Erfindung betrifft ein Schwerlastgetriebe nach dem Oberbegriff von Anspruch 1.

Für den Antrieb von Walzenschüsselmühlen mit um eine vertikale Achse rotierender Mahlschüssel werden Schwerlastgetriebe eingesetzt, welche die von einem horizontal angeordneten Antriebsmotor bereitgestellte Rotationsbewegung in eine vertikale, langsame Rotation umwandeln. Als Antriebsmotoren werden dabei häufig Elektromotoren eingesetzt, deren Drehzahl beispielsweise in einem Verhältnis vom 40:1 untersetzt werden muss.

Da derartige Getriebe eine hohe Leistungsübertragung bei niedrigen Drehzahlen erbringen müssen, wird für die Umlenkung der Antriebsachse eine Kegelradstufe eingesetzt, welche bereits eine erste Untersetzung der Drehzahl bewirkt. In vertikaler Richtung wird danach die Drehzahl durch eine Reduktionsstufe weiter untersetzt, beispielsweise in Form eines Umlaufgetriebes resp. Planetengetriebes.

Ein Schwerlastgetriebe für den Antrieb von vertikal stehenden Mahlschüsseln ist beispielsweise aus der gattungsgemäßen CH 694 244 bekannt. Dabei ist eine Kegelradstufe mit einer horizontalen Antriebswelle vertikal mit einem mehrstufigen Umlaufgetriebe verbunden, welches schliesslich die Mahlschüssel antreibt. Dabei ist das Umlaufgetriebe als mehrstufiges Planetengetriebe mit Leistungsteilung ausgebildet, bei welchem der Leistungsabtrieb summiert in die Hohlradverzahnung des Hohlradkörpers des Planetengetriebes erfolgt.

Die Aufgabe der vorliegenden Erfindung bestand darin, ein derartiges Schwerlastgetriebe zu finden, welches bei kompaktem Aufbau eine einfache Montage erlaubt.

Diese Aufgabe wird erfindungsgemäss durch ein Schwerlastgetriebe mit den Merkmalen von Anspruch 1 gelöst. Weitere, erfindungsgemässe Ausführungsformen ergeben sich aus den Merkmalen der weiteren Ansprüche 2 bis 5.

Es wird ein Schwerlastgetriebe für den Antrieb von Walzenschüsselmühlen mit einer Kegelradstufe mit horizontaler Antriebswelle und vertikaler Abtriebswelle und mit der Abtriebswelle über ein Sonnenritzel verbundene, mehrstufige Umlaufgetriebeanordnung, welche über einen Abtriebsflansch mit der Mahlschüssel der Walzenschüsselmühle verbindbar ist vorgeschlagen. Erfindungsgemäss sind in einer ersten Ebene in das Sonnenritzel kämmend eingreifende Planetenräder an einem Planetenradträger angeordnet, wobei der Planetenradträger mit dem Abtriebsflansch verbunden ist. Weiter sind in einer zweiten Ebene weitere Planetenräder angeordnet, deren Drehachsen mit dem Getriebegehäuse verbunden sind, und welche einerseits in ein mit dem Planetenradträger verbundenes Hohlrad eingreifen und andererseits in ein Sonnenritzel eines Zwischenrades eingreifen, welches weiter ein Hohlrad aufweist, das kämmend von aussen in die Planetenräder der ersten Ebene eingreift.

Damit wird ein sehr kompaktes Getriebe mit Leistungsteilung vorgeschlagen, bei welchem die Leistung einerseits über die Achsen der Planetenräder über den Planetenradträger direkt in den Abtriebsflansch übertragen wird und andererseits über eine weitere Planetenstufe über ein mit dem Planetenradträger verbundenes Hohlrad in den Abtriebsflansch übertragen wird. Der mechanische Aufbau des Getriebes erlaubt zudem vorteilhaft einen einfachen Einbau und Aufbau des Getriebes im Getriebegehäuse, da die einzelnen Komponenten des Getriebes einfach von oben an die dafür vorgesehene Stelle eingebracht werden können. Damit werden auch nachträgliche Unterhalts-, Reparatur- und Wartungsarbeiten an einzelnen Komponenten des Getriebes erleichtert, da unter Umständen nicht das gesamte Umlaufgetriebe in einem Stück aus- und eingebaut werden muss. Weiter weisen durch den kompakten Aufbau des erfindungsgemässen Getriebes die Einzelteile eine geringe Grösse auf, wodurch diese kostengünstiger hergestellt werden können und auch leichter zu Handhaben sind.

Beispielsweise sind in der ersten Ebene drei Planetenräder angeordnet. Die Planetenräder sind dabei vorzugsweise in regelmässigem Abstand untereinander, d.h. in einem Winkel von 120° in Bezug auf die Längsachse untereinander, angeordnet.

Beispielsweise sind in der zweiten Ebene mindestens drei Planetenräder angeordnet. Auch dabei sind die Planetenräder vorzugsweise in regelmässigem Abstand untereinander, d.h. in einem Winkel von 120° in Bezug auf die Längsachse untereinander, angeordnet.

Beispielsweise ist die erste Ebene oberhalb der zweiten Ebene angeordnet ist, vorzugsweise unmittelbar übereinander angeordnet. Durch die Leistungsverzweigung und die Anordnung von mindestens drei Planetenräder pro Stufe resultiert eine sehr kompakte Bauweise des erfindungsgemässen Getriebes. Durch die Leistungsverzweigung resultiert eine geringere zu übertragende Leistung in der zweiten Stufe, so dass diese kleinere Dimensionen aufweisen kann.

Beispielsweise ist der Planetenradträger als Hohlrad ausgebildet, innerhalb welchem alle weiteren Zahnräder der Umlaufgetriebeanordnung angeordnet sind. Einerseits wird damit die Umlaufgetriebeanordnung durch den Planetenradträger als radial äusserste Begrenzung abgedeckt und andererseits lässt sich damit der Planetenradträger einfach nach oben aus der Umlaufgetriebeanordnung herausheben.

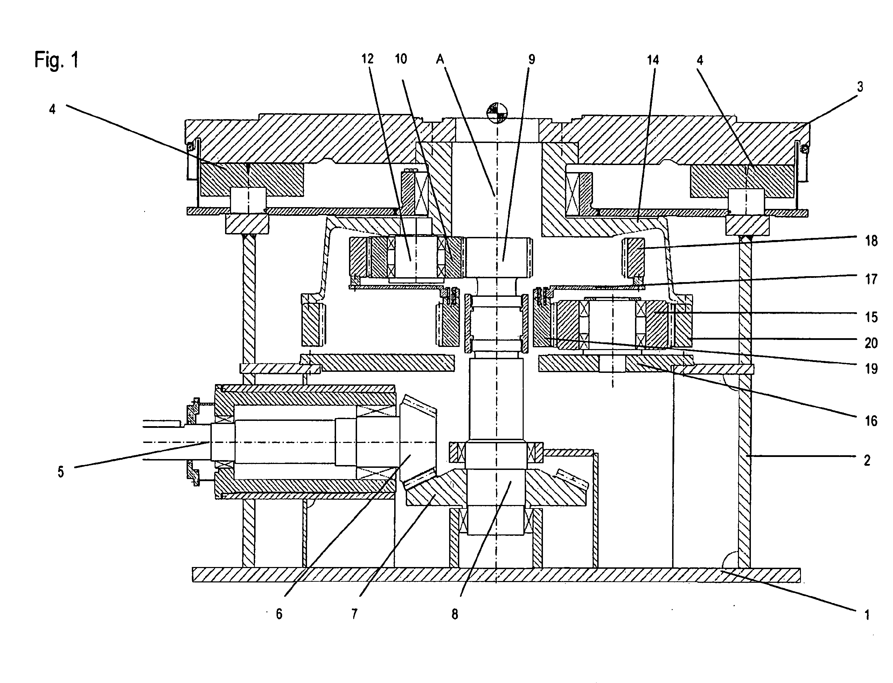

Ein Ausführungsbeispiel der vorliegenden Erfindung wird nachstehend anhand einer Figur noch näher erläutert. Es zeigt
Fig. 1 schematisch den Längsschnitt durch ein erfindungsgemässes Getriebe.

In Figur 1 ist schematisch der Längsschnitt durch ein erfindungsgemässes Getriebe dargestellt. Das Getriebe weist ein Bodenplatte 1 mit nach oben abragenden Gehäusewänden 2 auf, auf welches sich ein Abtriebsflansch 3 über Lager 4 abstützt. Der Abtriebsflansch 3 ist mit einer Mahlschüssel einer Walzenschüsselmühle (der Übersichtlichkeit halber nicht dargestellt) verbindbar.

Für die Verbindung mit einer Antriebsmaschine ist eine horizontal angeordnete, kopfseitig mit einem Kegelritzel 6 versehene Antriebswelle 5 angeordnet. Das Kegelritzel 6 kämmt in ein horizontal liegendes Kegelrad 7 mit vertikaler Abtriebswelle 8 ein. Die Abtriebswelle 8 ist axial mit einem Sonnenritzel 9 formschlüssig verbunden. Dies kann beispielsweise mittels einer Wellenkupplung erfolgen, wie in der Figur 1 dargestellt.

Das Sonnenritzel 9 kämmt in eine Gruppe von Planetenrädern 10 ein, welche in einer mittleren Ebene im Getriebe liegend angeordnet sind. Die Planetenräder 10 sind über Achszapfen 12 im Planetenträger 14 gelagert. Dieser Planetenträger 14 ist direkt mit dem Abtriebsflansch 3 kraftschlüssig verbunden.

In einer zweiten Ebene, hier beispielsweise unterhalb der ersten Ebene mit Gruppe von Planetenrädern 10 ist eine zweite Gruppe von Planetenrädern 15 angeordnet. Diese Planetenräder 15 sind auf einem fest oder lösbar mit dem Gehäuse 2 des Getriebes verbundenen Träger 16 ortsfest angeordnet. Diese zweite Gruppe von Planetenrädern 15 kämmen in ein Hohlrad 17 ein, welches mit dem Planetenradträger 14 verbunden ist resp. an diesem ausgebildet ist. Damit lässt sich beispielsweise der Träger 16 einfach von oben in das Gehäuse 2 des Getriebes einführen und mit diesem Verbinden, beispielsweise mittels Schrauben. Dabei können vorteilhaft die Planetenräder 15 bereits am Träger 16 vormontiert sein.

Zwischen den beiden Gruppen von Planetenrädern 10 resp. 15 ist ein um die Getriebehochachse A des Getriebes frei drehbares Zwischenrad 17 angeordnet, welche eine Hohlradverzahnung 18 aufweist, in welche die Planetenräder 10 der ersten Gruppe einkämmen, und eine Sonnenverzahnung 19 aufweist, die in die Planetenräder 15 der zweiten Gruppe eingreift. Das Zwischenrad 17 lässt sich nach dem Einbau des Trägers 16 mit den Planetenrädern 15 einfach von oben in die Getriebeanordnung einführen resp. einlegen. Über diese Anordnung kann schliesslich ebenfalls von oben der Planetenradträger 14 aufgesetzt werden und damit das Getriebe komplettiert werden.

In umgekehrter Reihenfolge kann die Getriebeanordnung schliesslich wieder zerlegt werden, vorteilhaft in einzelne Baugruppen. Damit können Wartungsarbeiten vorgenommen werden, ohne dass beispielsweise die vollständige Getriebeanordnung aus dem Gehäuse 2 entfernt resp. herausgehoben werden müsste.

Durch diese Anordnung wird eine Leistungsverzweigung der über die Antriebswelle 5 eingespeisten Arbeitsleistung erzielt. Der Leistungsabtrieb erfolgt dabei einerseits über die Achszapfen 12 der ersten Gruppe von Planetenrädern 10 direkt in den Planetenradträger 14 und andererseits über die zweite Gruppe von Planetenrädern 15 über das Hohlrad 20 in den Planetenradträger 14.

Diese Getriebeauslegung führt zu einem sehr kompakten Aufbau, der auch einfach zusammenzustellen und für Wartungs- resp. Unterhalts- oder Reparaturarbeiten ebenfalls einfach zu demontieren ist.

## Patentansprüche

1. Schwerlastgetriebe für den Antrieb von Walzenschüsselmühlen mit einer Kegelradstufe (6,7) mit horizontaler Antriebswelle (5) und vertikaler Abtriebswelle (8) und mit der Abtriebswelle (8) über ein Sonnenritzel (9) verbundene, mehrstufige Umlaufgetriebeanordnung, welche über einen Abtriebsflansch (3) mit der Mahlschüssel der Walzenschüsselmühle verbindbar ist, wobei in einer ersten Ebene in das Sonnenritzel (9) kämmend eingreifende Planetenräder (10) an einem Planetenradträger (14) angeordnet sind, wobei der Planetenradträger (14) mit dem Abtriebsflansch (3) verbunden ist, und dass in einer zweiten Ebene weitere Planetenräder (15) angeordnet sind, deren Achsen mit dem Getriebegehäuse (2) verbunden sind, **dadurch gekennzeichnet, dass** die weiteren Planetenräder (15) in der zweiten Ebene einerseits in ein mit dem Planetenradträger (14) verbundenes Hohlrad (20) eingreifen und andererseits in ein Sonnenritzel (19) eines Zwischenrades (17) eingreifen, welches weiter ein Hohlrad (18) aufweist, das kämmend von aussen in die Planetenräder (10) der ersten Ebene eingreift.

2. Schwerlastgetriebe nach Anspruch 1, **dadurch gekennzeichnet, dass** in der ersten Ebene mindestens drei Planetenräder angeordnet sind.

3. Schwerlastgetriebe nach Anspruch 1 oder 2, **dadurch gekennzeichnet, dass** in der zweiten Ebene mindestens drei Planetenräder angeordnet sind.

4. Schwerlastgetriebe nach einem der Ansprüche 1 bis 3, **dadurch gekennzeichnet, dass** die erste Ebene oberhalb der zweiten Ebene angeordnet ist, vorzugsweise unmittelbar übereinander angeordnet sind.

5. Schwerlastgetriebe nach einem der Ansprüche 1 bis 4, **dadurch gekennzeichnet, dass** der Planetenradträger (14) als Hohlrad ausgebildet ist, innerhalb welchem alle weiteren Zahnräder der Umlaufgetriebeanordnung angeordnet sind.

## Claims

1. Heavy-duty transmission for the drive of bowl-mill roller crushers, with a bevel gear stage (6, 7) having a horizontal drive shaft (5) and vertical output shaft (8), and a multi-stage epicyclic transmission arrangement which is connected to the output shaft (8) via a sun pinion (9) and can be connected to the grinding bowl of the bowl-mill roller crusher via an output flange (3), wherein, in a first plane, planet wheels (10) which engage in a meshing manner in the sun pinion (9) are arranged on a planet carrier (14), wherein the planet carrier (14) is connected to the output flange (3), and wherein further planet wheels (15), the axles of which are connected to the transmission housing (2), are arranged in a second plane, **characterized in that** the further planet wheels (15) in the second plane engage firstly in a ring wheel (20) connected to the planet carrier (14) and engage secondly in a sun pinion (19) of an intermediate wheel (17) which has a further ring wheel (18) which engages in a meshing manner from the outside in the planet wheels (10) of the first plane.

2. Heavy-duty transmission according to Claim 1, **characterized in that** at least three planet wheels are arranged in the first plane.

3. Heavy-duty transmission according to Claim 1 or 2, **characterized in that** at least three planet wheels are arranged in the second plane.

4. Heavy-duty transmission according to one of Claims 1 to 3, **characterized in that** the first plane is arranged above the second plane, said planes preferably being arranged one directly above the other.

5. Heavy-duty transmission according to one of Claims 1 to 4, **characterized in that** the planet carrier (14) is designed as a ring wheel within which all of the further gearwheels of the epicyclic transmission arrangement are arranged.

## Revendications

1. Engrenage pour charges lourdes pour l'entraînement de broyeurs à cuve à rouleaux avec un étage de roues coniques (6, 7) avec un arbre d'entraînement horizontal (5) et un arbre de sortie vertical (8) et un dispositif d'engrenage planétaire à plusieurs étages relié à l'arbre de sortie (8) par un pignon planétaire (9) qui peut être relié à la cuve broyeuse du broyeur à cuve à rouleaux par une flasque de sortie (3), dans lequel des roues planétaires (10) s'engrenant dans le pignon planétaire (9) sont montées dans un premier plan sur un porte-roues planétaires (14), dans lequel le porte-roues planétaire (14) est relié à la flasque de sortie (3), et d'autres roues planétaires (15), dont les axes sont reliés au carter d'engrenage (2), sont montées dans un second plan, **caractérisé en ce que** les autres roues planétaires (15) dans le second plan s'engrènent, d'une part, dans une roue à denture planétaire (20) reliée au porte-roues planétaire (14) et, d'autre part, dans un pignon planétaire (19) d'une roue intermédiaire (17) qui comporte, en outre, une roue à denture planétaire (18) qui s'engrène de l'extérieur dans les roues planétaires (10) du premier plan.

2. Engrenage pour charges lourdes selon la revendication 1, **caractérisé en ce qu'**au moins trois roues planétaires (10) sont disposées dans le premier plan.

3. Engrenage pour charges lourdes selon la revendication 1 ou 2, **caractérisé en ce qu'**au moins trois roues planétaires (10) sont disposées dans le second plan.

4. Engrenage pour charges lourdes selon l'une quelconque des revendications 1 à 3, **caractérisé en ce que** le premier plan est disposé au-dessus du second plan.

5. Engrenage pour charges lourdes selon l'une quelconque des revendications 1 à 4, **caractérisé en ce que** le porte-roues planétaire (14) est conçu comme une roue à denture planétaire à l'intérieur de laquelle sont disposées toutes les autres roues dentées du dispositif d'engrenage planétaire.
